# EUROPEAN PATENT APPLICATION

(11) **EP 1 188 788 A1**
(43) Date of publication of application: **20.03.2002**
(21) Application number: 00119662.5
(22) Date of filing: 08.09.2000
(51) Int. Cl.: C08K 5/13

(54) **Extrusion of polyolefins**

(71) Applicant: Borealis Technology Oy, 06101 Porvoo (FI)
(72) Inventor: Lindbom, Lena, 44290 Kungälv (SE); Nylander, Perry, 412 61 Göteborg (SE)
(74) Representative: Kador & Partner

(57) **Abstract**

Use of a defined class of polyhydroxyl phenols as scorch retardant additives in extrusion of polyolefins, particularly of semiconducting polyethylene-based materials for use in cable sheathing in which the additives further manifest a water-tree retardant effect.

## Description

The present invention relates to the prevention of scorch during extrusion of polyolefins, particularly crosslinkable polyolefins destined for use as sheathing for electrical cables, especially semi-conducting and insulation layers, and to the production of such sheathing having enhanced water tree resistance.

It is known to crosslink polymers by means of additives. The crosslinking improves the properties of the polymer, such as its mechanical strength and heat resistance. Polymers normally considered to be thermoplastics and not crosslinkable, such as polyethylene, can be crosslinked by introducing crosslinkable groups in the polymer. Thus a silane compound can be introduced as a crosslinkable group, e.g. by grafting the silane compound onto the prepared polyolefin, or by copolymerisation of the olefin and the silane compound. Other methods are to introduce a free radical source, for example organic peroxide or azo-compounds.

In processing polymers by extrusion it is important that crosslinking not occur until after the mixture has left the extruder, since premature crosslinking or precuring makes it impossible to maintain a uniform production capacity, and furthermore the quality of the resulting product will be unsatisfactory. Crosslinking or precuring actually within the extruder causes gelation and adhesion of polymer gel to the surfaces of the equipment, with consequent risk of clogging. The extruder therefore has to be cleaned to remove adhering polymer gel, and for every cleaning operation the equipment must be shut down, which entails a fall in production.

Furthermore any gel lumps which do not clog the production equipment are incorporated into the product in the form of disfiguring and unwanted clots. In thin layers, for example films and foils, such lumps are unacceptable and in many cases make the product unusable. In pipe applications scorch particles could be crack initiators.

This unwanted precuring (referred to as "scorching") can be counteracted by incorporating in the polymer composition substances counteracting precuring, so-called scorch retarders.

It is know, for example from EP 0,193,317, to counteract the precuring of a crosslinkable, silane-containing copolymer composition comprising polyethylene by adding to the composition a scorch retarder in the form of 0.01-5 parts by weight of a silane compound with a hydrolysable organic group.

It is also known, from EP 0,245.938, to produce a composition comprising a crosslinkable silyl polymer and a filler and having a reduced tendency to premature crosslinking of the silyl polymer, by adding to the composition a water scavenger chosen from organic orthoesters, organic acetals, organic ketals or certain silanes, particularly an alkyl orthoformate.

These scorch retarders have not, however, satisfactorily solved the problem of premature curing, particularly in free radical crosslinked materials, reducing the product quality and production capacity.

A homogeneous admixing of additives, including the precuring retarder, presupposes that the polymer is in a melted state, i.e. has a temperature of between 130°C and 300°C. Similar conditions are prevalent when the polymer raw material is processed to the finished product. In both cases, there is normally a slow cooling procedure after processing. Furthermore, the compounded polymer raw material should be able to withstand at least several months of storage before being processed to a formed product.

It is envisaged, according to the present invention, that the polymer undergoing extrusion may be used for the manufacture of products such as electric cable sheathing.

Electric cables, and particularly electric power cables for medium and high voltages, are usually composed of a plurality of polymer layers extruded around the electric conductor. In power cables the electric conductor is usually coated first with an inner semiconductor layer followed by an insulating layer, then an outer semiconductor layer possibly followed by water barrier layers, and on the outside a sheath layer. The layers of the cable are made of various polyolefin plastics, usually crosslinked polyethylene.

Polyolefin plastics may be composed of homopolymers or copolymers of ethylene, wherein the copolymers may be graft copolymers or copolymers of ethylene and one or more monomers which are copolymerisable with ethylene.

LDPE (low density polyethylene, i.e. polyethylene prepared by radical polymerisation at a high pressure) crosslinked with peroxide, for instance dicumyl peroxide, in connection with the extrusion of cable, is today the predominant cable insulating material.

The inner semiconducting layer normally comprises a polyethylene and/or copolymer, such as an ethylene-vinyl acetate copolymer (EVA), or ethylene-ethyl acrylate copolymer (EEA), an ethylene-butyl acrylate copolymer (EBA), an ethylene propylene diene rubber (EPDM) or an ethylene propylene rubber, together with a sufficient amount of carbon black to make the composition semiconducting. The composition of the outer semiconducting layer differs depending on whether it has to be stipppable or not. Normally a strippable semiconducting layer comprises an ethylene copolymer, such as an ethylene-vinyl acetate copolymer (EVA), optionally together with an acrylonitrile-butadiene rubber (NBR), and sufficient carbon black to make the composition semiconducting. A non-strippable (bonded), outer semiconducting layer may comprise EVA, EEA or EBA together with an amount of carbon black sufficient to make the composition semiconducting.

A limitation of such polymers is their tendency to develop, in the presence of water and under the action of strong electric fields, dendritically branched defects, so-called "water trees", which can lead to breakdown and possible electric failure. This tendency is strongly affected by the presence of inhomogeneities, microcavities and impurities in the material.

From EP-A-0,057,604 is known to inhibit water treeing by adding to a semiconducting composition, which mainly consists of a polyolefin and 5-50% by weight carbon black based on the weight of the total composition, a polyethylene glycol having a molecular weight of about 1000-20000 in an amount of 0.1-20% by weight. This composition is intended for semiconducting layers of electric cables and by adding polyethylene glycol, it is said to be possible to eliminate water trees which grow into the insulating layer from the interface between the insulating layer and the semiconducting layer.

US-A-4,812,505 discloses a composition, usable as insulting layer in electric cables and resistant to water treeing, comprising a copolymer of ethylene and at least one alpha-olefin having 4-8 carbon atoms, such as 1-butene, 1-hexane or 1-octene, and beside comprises a polyethylene glycol having a molecular weight in the range of about 1000-20000 in an amount of 0.1-20% by weight.

There remains, however a need for materials having further improved properties with regard to water tree resistance (WTR), electrical breakdown strength and dielectric dissipation factor.

We have now identified a material which, when added to a polyolefin composition undergoing extrusion, will not only act as a highly effective scorch retardant during extrusion but will persist in the extruded product and act as a highly effective water tree retardant in those cases when the ultimate use of that product is as electrical cable sheathing.

According to the present invention, therefore, there is used, as a scorch retardant in the extrusion of polyolefins, a compound of the formula: 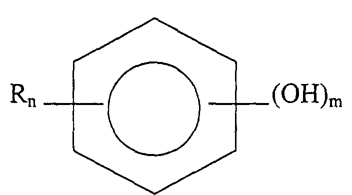 wherein R is an alkyl or alkenyl group having 1 to 6 carbon atoms, m is 2 or 3, n is 0 to 4 and (m+n) is ≤ 6, and said scorch retardant is present in the amount of 0.01 to 5 parts by weight per 100 parts by weight of polyolefin.

Not only the above defined compounds but also their adducts, with other compounds which may or may not conform to the stated formula, have been found to be useful in the practice of the invention.

In one particularly favoured embodiment the scorch retardant comprises toluylhydroquinone, mono-t-butyl hydroquinone, 2,5-di-t-butylhydroquinone and/or amylhydroquinone; in another it comprises t-butyl catechol and/or isopropyl catechol. It is preferably present in the amount of 0.05 to 1, still more preferably 0.1 to 0.8, parts by weight per 100 parts by weight of the polyolefin.

The polyolefin is preferably a homopolymer of polyethylene or polypropylene, particularly preferred being copolymers of the former with etoxylated acrylate, an amine acrylate, acrylic acid, methyl acrylate, ethyl acrylate, butyl acrylate, vinyl acetate and/or a 3-8 carbon atom α-olefin comonomer. Such comonomers usually constitute 1 to 40% wt. of the polyolefin.

When the product of extrusion is destined to serve as semiconducting cable sheathing the polyolefin will be extruded in admixture with 1 to 50 parts by weight, per 100 parts by weight of polyolefin, of a particulate additive which renders it semiconducting, typically carbon black. In such a case, the direct product of the extrusion may be the sheathing: in other cases the product may simply be chopped and stored as granules for diverse later uses.

Effective compounds falling within the class defined by the aforesaid general formula are polyhydric phenols, quinones, hydroquinones, catechols, resorcinols, pyrogalloles, phloroglucinols and quinhydrones. Generally, those in which m=2 are the more effective, particularly the resorcinols and resorcinarenes.

As specific further examples of compounds falling within the class and known for various industrial applications there may be mentioned: diamylhydroqunione, methyl catechol and 2,5-di-t-amylhydroquinone.

A further and favoured scorch retardant formulation, herein designated INHIBITORMIX consists of equal parts by weight of toluylhydroquinone, 2,5-di-t-butylhydroquinone and mono-t-butylhydroquinone.

In addition to scorch retardant conventional additives, such as antioxidants to counteract decomposition due to oxidation, radiation , etc.; lubricating additives, such as stearic acid; crosslinking additives, such as peroxides which decompose upon heating and initiate crosslinking; and other desirable additives may be added to the polyolefin. The overall amount of additives, including the scorch retardant should not exceed 10% by weight of the extrudate.

The preferred polyolefin employed according to the invention is a polyethylene copolymer, particularly favoured copolymers being those of ethylene with butyl acrylate, ethyl acrylate, methyl acrylate and with vinyl acetate. The comonomer content of the copolymers is advantageously 0.5-35% wt., better still 1-25% by weight.

Copolymers may be prepared by copolymerisation or by grafting: in the latter case the methods disclosed in US-A-3,646,155 or -4,117,195 may suitably be employed for the grafting.

Suitable comonomers for use in copolymerisation with ethylene include: (a) vinylcarboxylate esters, such as vinyl acetate and vinyl pivalate, (b) alpha olefins, such as propylene, 1-butene, 1-hexene, 1-octene, and 4-methyl-1-pentene, (c) (meth)acrylates, such as methyl(meth)acrylate, ethyl(meth)acrylate and butyl(meth)acrylate, (d) olefinically unsaturated carboxyl acids, such as (meth)acrylic acid, maleic acid and fumaric acid, (e) (meth)acrylic acid derivatives, such as (meth)acrylonitrile and (meth)acrylamide, (f) vinyl ethers, such as vinylmethyl ether and vinylphenyl ether and (g) aromatic vinyl compounds, such as styrene and alfa-methyl styrene. Preferred comonomers are vinyl esters of monocarboxylic acids having 1-4 carbon atoms, such as vinyl acetate, and (meth)acrylate of alcohols having 1-4 carbon atoms, such as methyl(meth)acrylate. Especially preferred comonomers are butyl acrylate, ethyl acrylate and methyl acrylate. Two or more of these olefinically unsaturated compounds may be used in combination. (The expression "(meth)acryl" includes both acryl- acid and methacryl- radicals.)

The polyolefin subjected to extrusion commonly has a density in the range 0.915 to 0.955, preferably 0.920-0.950 g/cm³, and a melt flow rate of 0.1 to 20.0 g/10 min with 2 kg load and a temperature of 190°C. Higher density polymers are used for pipe manufacture, lower for cable applications. In some cases, when for example Single Site polyethylenes are used, the density of the resin can be less then 900 g/cm³.

The invention further comprehends pipes and cable sheathing whose manufacture includes the use during extrusion of the aforesaid scorch retardant and which are characterised, respectively, by resistance to cracking and to development of water trees.

When a crosslinking agent is present during the extrusion it may be any such agent appropriate to the particular polyolefin to be crosslinked. Free radical initiators such as organic peroxides are generally suitable, but in particular cases, as when the polymer contains hydrolysable silane groups, a substituted silane may be employed as taught in WO 90/07542. Particularly favoured peroxides include dicumyl peroxide and 2,5-dimethyl-2,5-di(t-butylperoxy)hexane. Alternatively, crosslinking may be effected by physical techniques, such as irradiation.

A typical formulation to be extruded for use as cable semiconducting sheath will have the composition, in weight %:

| | |
|---|---|
| Polyolefin | 30-80 |
| Scorch Retardant | 0.05-4 |
| Particulate additive | 15-45 |
| Peroxide | 0-4 |
| ANB | 0-4 |
| (ANB designates acrylonitrile-butadiene-ethylene copolymer.) | |

In the Examples of the invention which follow, the following test procedures were employed to assay product properties.

### Scorch (BTM 22527)

This test is designed to quantify the degree of scorch which occurs during extrusion. It accelerates scorching, producing in a few hours a degree of scorch which in normal operation would take several days to build up.

A Collin extruder with a 25 mm single screw (compression 3:1) is used with a specially designed die for evaluation of scorch in the die. The adiabatic melt temperature of the material in the die is recorded. Scorch is obtained during extrusion as deposits due to high viscosity or stagnant zone, e.g. in the die. A die with a relatively long channel with constant diameter, in combination with low material flow, is therefore used. The residence time is long and the flow rate is low. The material flow rate is highest in the middle of the channel and reduced towards the channel wall.

The temperature settings are 110/120/125/125°C. The output is 1000±10 g/hour. The material is run continuously for 5 hours. After 5 hours the adiabatic temperature is recorded. If carbon black filled peroxide containing material has been run, then the material that has not been precrosslinked is flushed out by the following procedure. Thermoplastic carbon black filled material is run through the extruder. The temperature setting is changed to 110/120/125/125°C (if different). When the right temperature is obtained, natural PE is added and run for 25 minutes at 30 rpm. After this the temperature is turned off and the hot sample in the die is taken out. The amount of scorch is measured in the sample. The sample is first cut into three pieces. The part where the adiabatic temperature sensor was injected is excluded. 0.2-0.3 mm cross-sections are then taken from the three pieces at six different positions. The volume part of scorch in the six cross sections is measured by microscope. The mean value of the six cross sections is reported.

### Dielectric Strength and beta value (ACATEL)

The tested materials were used in the form of inner semiconducting layers in electric cables, which, seen from inside and outwards, consisted of a 1.4 mm copper conductor, an inner semiconducting layer having an outer diameter of 2.8 mm, an insulating layer having an outer diameter of 5.8 mm and an outer semiconducting layer having an outer diameter of 6.1 mm. The insulating layer consisted of low-density polyethylene having a density of 0.923 g/cm³ and a MFR of 2 g/10 min, and the outer semiconducting layer consisted of an ethylene-butyl acrylate copolymer with an addition of about 35% by weight carbon black.

The testing of the dielectric strength was carried out on these test cables in accordance with a method developed by Alcatel AG & Co, Hanover, Germany, and described in an article by Land H.G., Schädlich Hans, "Model Cable Test for Evaluating the Ageing Behaviour under Water Influence of Compounds for Medium Voltage Cables", Conference Proceedings of Jicable 91, 24-28 June 1991, Versailles, France. As a value of the dielectric strength is stated 63% of Eₘₐₓ from Weibull diagram in kV/mm. After conditioning the cables for 16 h at 90°C the cables were aged for 1000 h at 9 kV/mm in 70°C water heated via the inner conductor, which was kept at 85°C, whereupon the dielectric strength was determined (T=1000h) as well as the beta value (spreading). A higher beta value means less spreading.

Both Eₘₐₓ and β values provide a measure of water tree resistance.

The following abbreviations are used in the Examples:

| | | |
|---|---|---|
| Base Resin (polyolefin) | EBA | Ethylene-butyl acrylate |
| | EVA | Ethylene-vinyl-acetate |
| Additives (SRA) | HQ | Hydroquinone |
| | THQ | Toluylhydroquinone |
| | DTBHQ | 2,5-di-tertiary-butylhydroquinone |
| | MTBHQ | Mono-tertiary-butylhydroquinone |
| | Inhibitormix | 1/3 THQ, 1/3 DTBHQ, 1/3 MTBHQ |
| | AmylHQ | 2,5-di-tert.amyl-hydroquinone |
| Carbon black (particulate) | CB | High structure Carbon Black |
| Peroxide (x-linker) | PO1 | 2,5-dimethyl 2,5-di(tert.butylperoxy)hexane |
| | PO2 | Dicumyl peroxide |

which are provided for the purpose of illustration only.

### EXAMPLE 1

Three Reference resin formulations - A, H and I - suitable for manufacture of inner or outer semiconducting layers for electrical cables were prepared. Each consisted of a base PE copolymer and carbon black. Preparation was carried out by blending in a 46 mm Buss Ko-Kneter.

Formulations B-G each of which consisted of A supplemented by SRA, and Formulations J-K, each of which consisted of Formulation H/I supplemented by SRA, were prepared similarly, as were the mixed Formulations L-N.

Formulations A to K were then subjected to an extrusion following the procedure of BMT 22527 in order to evaluate the retardation of scorch brought about by the presence of the SRA. The results are set out in Table 1.

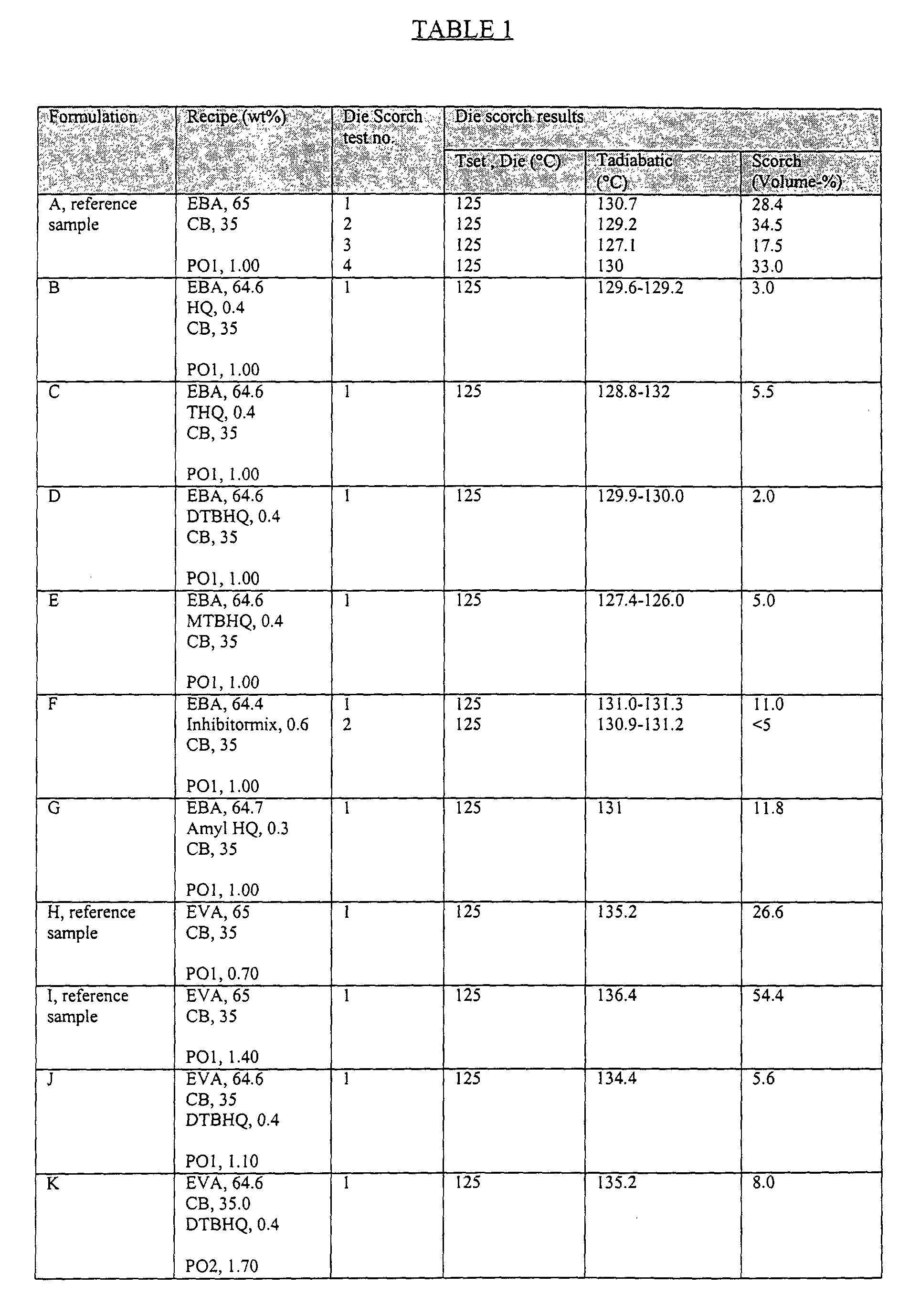

It will be observed that the degree of scorch is massively reduced in Formulations B-G relative to A, and in J-K relative to H/I.

### EXAMPLE 2

The effect of variation in quantity of SRA was investigated by extrusion of mixed Formulations L-N following the procedure of BMT 22527. The results are set out in Table 2.

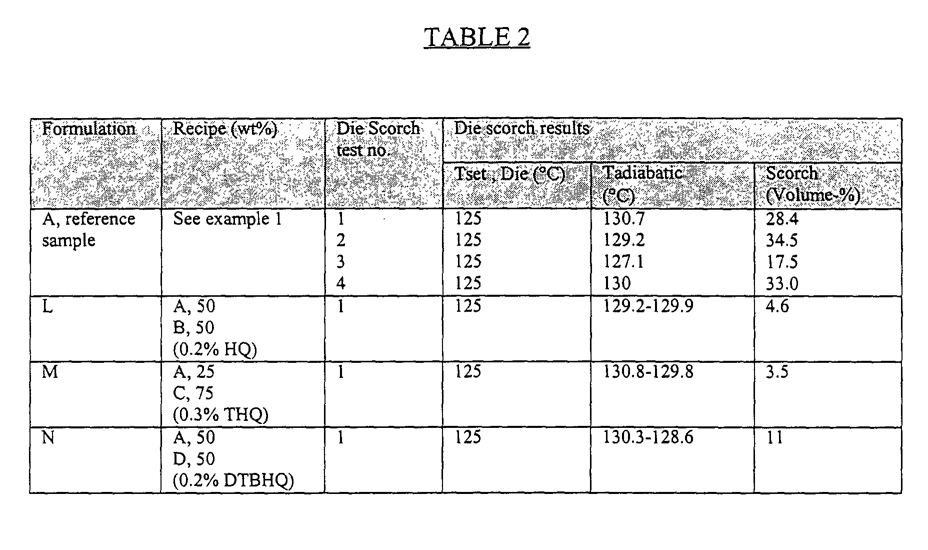

### EXAMPLE 3

Formulations A and D, in the form of the extruded cable sheaths prescribed by the ALCATEL test, were evaluated for dielectric properties in the manner prescribed thereby. The results are set out in Table 3.

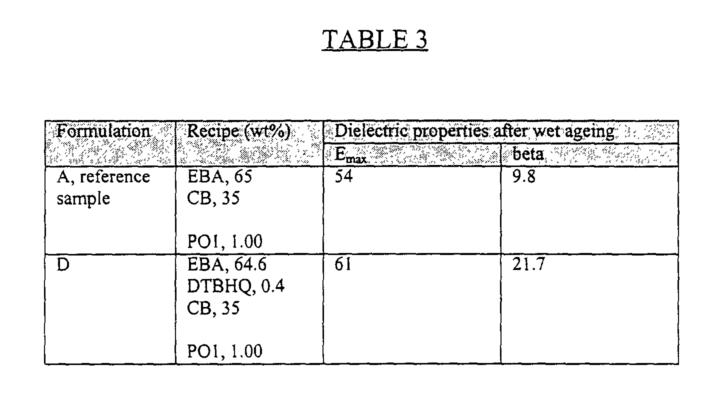

A significant improvement results from the incorporation of the SRA into the formulation.

## Claims

1. Use, as scorch-retardant in the extrusion of polyolefins, of compounds of the formula: 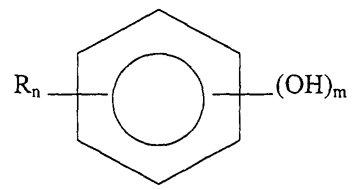 wherein R is an alkyl or alkenyl group having 1 to 6 carbon atoms, m is 2 or 3, n is 0 to 4 and (m+n) is ≤6, said scorch retardant being present in the amount of 0.01 to 5 parts by weight per 100 parts by weight of polyolefin.

2. Use according to claim 1 wherein the polyolefin is crosslinkable.

3. Use according to claim 1 or claim 2 wherein the polyolefin is in admixture with a crosslinking agent.

4. Use according to any of claims 1 to 3 wherein said scorch retardant comprises toluylhydroquinone, mono-t-butyl hydroquinone, 2,5-di-t-butylhydroquinone and/or amylhydroquinone.

5. Use according to any of claims 1 to 3 wherein said scorch retardant comprises t-butyl catechol and/or isopropyl catechol.

6. Use according to any preceding claim wherein the polyolefin comprises a homopolymer or copolymer of ethylene or propylene.

7. Use according to claim 6 wherein the copolymer comprises a copolymer of ethylene with an etoxylated acrylate, an amine acrylate, acrylic acid, methyl acrylate, ethyl acrylate, butyl acrylate, vinyl acetate and/or a 3-8 carbon atom α-olefin comonomer.

8. Use according to claim 7 wherein the comonomer constitutes 1 to 40% wt. of the copolymer.

9. Use according to any preceding claim wherein the polyolefin is in admixture with a particulate additive which renders it semi-conducting and is present in the amount of 1 to 50 parts by weight per 100 parts by weight of polyolefin.

10. Use according to 9 wherein said particulate additive is carbon black.

11. Use according to any of claims 1 to 10 wherein the polyolefin undergoing extrusion is in the as-manufactured state.

12. Use according to any of claims 1 tol 1 wherein the product of the extrusion is in the form of an electrical cable sheath.

13. Use according to any preceding claim wherein said scorch-retardant is present in the amount of 0.05 to 1 pbw per 100 pbw of said polyolefin.

14. Use according to any preceding claim wherein said scorch-retardant is present in the amount of 0.1 to 0.8 pbw per 100 pbw of said polyolefin.

15. Crack-resistant pipes produced by an extrusion **characterised by** use of a scorch retardant according to any of claims 1 to 8 and 13 to 14.

16. WTR-resistant cable sheathing produced by an extrusion **characterised by** use of a scorch retardant according to any of claims 1 to 14.
